# EUROPÄISCHE PATENTSCHRIFT

(11) **EP 3 074 734 B1**
(45) Veröffentlichungstag und Bekanntmachung des Hinweises auf die Patenterteilung: **29.07.2020**
(21) Anmeldenummer: 14786131.4
(22) Anmeldetag: 18.10.2014
(51) Int. Cl.: G01G 21/28

(54) **DECKEL EINES WINDSCHUTZES EINER PRÄZISIONSWAAGE SOWIE WINDSCHUTZ FÜR EINE PRÄZISIONSWAAGE**
COVER OF A WIND SHIELD OF A PRECISION BALANCE, AND WIND SHIELD FOR A PRECISION BALANCE
COUVERCLE D'UN PARAVENT D'UNE BALANCE DE PRÉCISION ET PARAVENT DESTINÉ À UNE BALANCE DE PRÉCISION

(30) Priorität: 25.11.2013 DE 102013112998
(43) Veröffentlichungstag der Anmeldung: 05.10.2016
(73) Patentinhaber: Sartorius Lab Instruments GmbH & Co. KG, 37079 Göttingen (DE)
(72) Erfinder: KUHLMANN, Otto, 37085 Göttingen (DE); LAUBSTEIN, Michael, 37077 Göttingen (DE); VON STEUBEN, Jan, 37075 Göttingen (DE)
(74) Vertreter: Prinz & Partner mbB
(86) Internationale Anmeldenummer: PCT/EP2014/002813
(87) Internationale Veröffentlichungsnummer: WO 2015/074733

(56) Entgegenhaltungen:
- EP-A1- 0 574 668
- EP-A1- 1 195 585
- EP-A1- 2 060 885
- US-A1- 2006 185 909

## Beschreibung

Die Erfindung betrifft einen Deckel eines Windschutzes einer Präzisionswaage sowie einen Windschutz für eine Präzisionswaage.

Es ist allgemein bekannt, an einer Präzisionswaage einen Windschutz anzubringen, der einen Wägeraum oberhalb der Waagschale der Waage umgibt. Dieser Windschutz hat die Aufgabe, eine Beeinflussung des Wiegevorgangs durch Luftbewegungen, elektrostatische Anziehungskräfte oder auch durch Wärmestrahlung zu verhindern. Um einen zu wiegenden Gegenstand auf die Waagschale legen zu können, sind Teile des Windschutzes, beispielsweise eine Seitenscheibe oder ein Deckel, verschiebbar, so dass der Windschutz zum Einlegen des zu wiegenden Gegenstands geöffnet werden kann.

Der Deckel ist häufig mehrteilig ausgebildet, mit einem Trägerrahmen und einem Abdeckelement, wobei am Trägerrahmen beispielsweise Führungsschienen vorgesehen sind. In den Führungsschienen sind beispielsweise die Seitenscheiben über Führungselemente verschiebbar gelagert. Das Abdeckelement ist beispielsweise schwenkbar am Trägerrahmen gehalten und kann die Führungsschienen so abdecken, dass die Führungselemente nicht aus den Führungsschienen entnommen werden können und somit sicher in den Führungsschienen gehalten sind. Die Fixierung in einer Haltestellung, in der die Führungsschienen abgedeckt sind, erfolgt bisher über separate Riegel, die am Trägerrahmen gehalten sind und zum Freigeben des Abdeckelements gedreht oder verschwenkt werden müssen. Die Bedienung dieser Riegel ist aber häufig sehr aufwändig.

Aus der DE 10 2008 008 486 A1 ist ein Deckel eines Windschutzes einer Waage bekannt, der in seiner Betriebsposition mittels einer Haltevorrichtung arretiert werden kann. Um den Deckel zu lösen, müssen zuerst Halteelemente von einer Verriegelungsstellung in eine Freigabestellung verschwenkt werden, in der die hinter den Halteelementen angeordneten Verriegelungselemente für den Deckel zugänglich sind. Anschließend müssen diese Verriegelungselemente betätigt werden, um den Deckel zu lösen. Häufig müssen die Verriegelungselemente mit einem Werkzeug betätigt werden.

Zusätzlich ist aus der EP 1 195 585 A1 eine Waage mit einem Windschutz bekannt, bei der der Windschutz eine Vorderwand, zwei Seitenwände und eine Abdeckwand umfasst. In der Waage ist zudem ein wägebodenseitiger Rahmen vorgesehen, der Führungs- und Halterungselemente für die bewegbar gestalteten Seitenwände enthält. Die Seitenwände können gegenüber dem Rahmen in eine Ver- und eine Entriegelungsstellung verschwenkt werden.

Aufgabe der Erfindung ist es, einen Deckel für einen Windschutz einer Präzisionswaage bereitzustellen, der ein einfaches Verschwenken des Abdeckelements zwischen einer Haltestellung und einer Freigabestellung ermöglicht. Aufgabe der Erfindung ist es des Weiteren, einen Windschutz bereitzustellen, der einen Deckel mit einem einfach zu öffnenden Abdeckelement aufweist.

Zur Lösung der Aufgabe ist ein Deckel eines Windschutzes einer Präzisionswaage vorgesehen, mit einem Trägerrahmen, an dem erste Halteelemente und/oder Führungsschienen für eine Frontscheibe und/oder zumindest eine Seitenscheibe vorgesehen sind, und mit einem Abdeckelement, das um eine an einem Rand vorgesehene Lagerung zwischen einer Haltestellung und einer Freigabestellung verschwenkbar ist, wobei an einem der Lagerung gegenüberliegenden zweiten Rand zweite Halteelemente am Deckel vorgesehen sind, die das Abdeckelement am zweiten Rand des Trägerrahmens fixieren. Die zweiten Halteelemente können durch Verschieben zumindest eines Abschnitts des zweiten Randes des Abdeckelements in Richtung zur Lagerung gelöst werden.

Die Fixierung des Abdeckelements in der Halteposition erfolgt erfindungsgemäß durch zweite Halteelemente, die durch Verschieben des Abdeckelements in Richtung zur Lagerung gelöst werden können. Dies ermöglicht ein einfaches Lösen der zweiten Halteelemente und Bewegen des Abdeckelements von der Halteposition in die Freigabeposition. Der zweite Rand des Abdeckelements, beispielsweise der vordere Rand, muss lediglich in Richtung zur Lagerung gedrückt werden. Nach dem Lösen der zweiten Halteelemente durch diesen Druck muss die Betätigungsrichtung nur geringfügig geändert werden, beispielsweise schräg nach oben, um das Abdeckelement in die Freigabestellung zu verschwenken. Das Abdeckelement kann also in einer flüssigen Bewegung entriegelt und anschließend in die Freigabestellung verschwenkt werden. Ein aufwendiges Lösen zusätzlicher Riegel ist nicht erforderlich.

Die zweiten Halteelemente können beispielsweise durch am Abdeckelement vorgesehene, von der Lagerung weg gerichtete Rastelemente und/oder Rastaufnahmen und am Rahmen vorgesehene, in Richtung zur Lagerung gerichtete Rastaufnahmen und/oder Rastelemente gebildet sein. Diese können einfach durch Verschieben des Abdeckelements in Richtung zum ersten Rand, also zur Lagerung gelöst werden. Zudem ist ein schnelles Fixieren des Abdeckelements in der Haltestellung möglich, indem das Abdeckelement in die Haltestellung verschwenkt wird, wodurch die Rastelemente an den Rastaufnahmen verrasten. Die Rastelemente können beispielsweise Haken sein, die einen Hinterschnitt aufweisen oder auch eine Rastschräge, die bei einer erhöhten Kraft, die das Abdeckelement von der Haltestellung in die Freigabestellung drückt, von den Rastaufnahmen abrutschen können.

Zum Lösen der Rastelemente von den Rastaufnahmen ist es ausreichend, wenn der zweite Rand des Abdeckelements bzw. der Bereich des Abdeckelements, an dem die Rastelemente oder die Rastaufnahmen vorgesehen sind, in Richtung zur Lagerung gedrückt wird. Vorzugsweise ist aber das gesamte Abdeckelement in Richtung zur Lagerung verschiebbar, um die zweiten Halteelemente zu lösen. Das Abdeckelement kann somit aus einem Stück gefertigt sein und eine sehr hohe Eigenstabilität aufweisen.

Um eine Verschiebung des Abdeckelements in Richtung zur Lagerung zu ermöglichen, kann beispielsweise die Lagerung vom zweiten Rand weg federnd ausgebildet sein, wobei die Lagerung insbesondere begrenzt verschiebbare Lagerungselemente aufweist. Das Abdeckelement ist vorzugsweise an diesen Lagerungselementen gehalten. Die Lagerungselemente können beispielsweise mit Federn am Trägerrahmen, am Windschutz oder der Präzisionswaage gehalten sein, so dass die Lagerungselemente federnd nachgeben können.

Vorzugsweise sind die Lagerungselemente in Richtung zu den zweiten Halteelementen federbeaufschlagt, so dass durch die Lagerungselemente beispielsweise die Rastelemente in die Rastaufnahmen gedrückt werden.

Die Lagerungselemente können jeweils einen Lagerungsbolzen aufweisen, um den das Abdeckelement schwenkbar ist. Am Abdeckelement kann ein Lagerungshaken vorgesehen sein, der an diesen Lagerungsbolzen angreift. Der Lagerungshaken kann beispielsweise offen ausgebildet sein, so dass das Abdeckelement nach dem Verschwenken in die Freigabestellung vollständig vom Trägerrahmen entfernt werden kann. Die Lagerungshaken sind dazu vorzugsweise von den zweiten Halteelementen weg offen ausgebildet. Da die Öffnung der Lagerungshaken von den zweiten Halteelementen weg gerichtet ist, werden die Lagerungshaken in der Haltestellung durch die Lagerungselemente und die zweiten Halteelemente gegen die Lagerungsbolzen gedrückt, so dass diese nicht voneinander gelöst werden können. Insbesondere ist es denkbar, dass die Lagerungshaken so ausgebildet sind, dass diese an den Lagerungsbolzen verrasten können.

Das Abdeckelement kann manuell, beispielsweise durch eine Druckkraft, von der Haltestellung in die Freigabestellung verschwenkt werden. Es ist aber auch denkbar, dass zwischen Rahmen und Abdeckelement zumindest ein Federelement vorgesehen ist, das das Abdeckelement in die Freigabestellung beaufschlagt. Somit ist es lediglich erforderlich, das Abdeckelement bzw. den zweiten Rand des Abdeckelements in Richtung zur Lagerung zu verschieben, um die zweiten Halteelemente voneinander zu lösen. Nach dem Lösen der zweiten Halteelemente wird das Abdeckelement durch das Federelement in die Freigabestellung gedrückt.

Der Deckel kann zusätzlich eine Deckscheibe aufweisen, die verschiebbar am Trägerrahmen gelagert ist, wobei das Abdeckelement in der Haltestellung die Deckscheibe am Trägerrahmen hält und in der Freigabestellung die Deckscheibe freigibt. Unabhängig davon kann die Deckscheibe im Trägerrahmen verschiebbar gelagert sein, so dass der Wägeraum durch Verschieben der Deckscheibe geöffnet oder geschlossen werden kann. Eine Entnahme der Deckscheibe, beispielsweise zu Reinigungszwecken, ist aber nur möglich, wenn sich das Abdeckelement in der Freigabestellung befindet. Die Deckscheibe wird also fixiert, wenn sich das Abdeckelement in die Haltestellung befindet.

Um zu verhindern, dass sich die Deckscheibe elektrostatisch auflädt, weist diese vorzugsweise eine elektrisch leitende Beschichtung auf.

Um ein Zerkratzen oder eine Beschädigung der Deckscheibe und/oder der elektrisch leitenden Beschichtung zu verhindert, sind am Trägerrahmen vorzugsweise Gleitschienen für die Deckscheibe vorgesehen, die insbesondere aus Kunststoff bestehen. In dieser Ausführungsform sind zusätzlich an den Gleitschienen elektrische Leiter, insbesondere Bürsten, vorgesehen, die an der Deckscheibe anliegen und diese elektrisch mit dem Trägerrahmen verbinden, so dass über diese eine elektrostatische Ladung abgeleitet werden kann.

Um eine elektrostatische Aufladung des Deckels oder von Teilen des Deckels zu verhindern, sind der Trägerrahmen, die Deckscheibe und/oder das Abdeckelement elektrisch leitend ausgebildet oder beschichtet und miteinander elektrisch leitend gekoppelt.

Zur Lösung der Aufgabe ist des Weiteren ein Windschutz für eine Präzisionswaage vorgesehen, mit einer Frontscheibe, einer Rückwand, zwei gegenüberliegenden Seitenscheiben und einem erfindungsgemäßen Deckel, wobei am Trägerrahmen Führungsschienen für die Seitenscheiben und/oder erste Halteelemente für die Frontscheibe vorgesehen sind. Somit ist ein einfacher Aufbau des Windschutzes möglich, da keine zusätzlichen Elemente zur Fixierung der Frontscheibe oder zur Lagerung der Seitenscheiben erforderlich sind.

Die Führungsschienen können beispielsweise einen U-förmigen, nach oben offenen Querschnitt aufweisen, so dass die Seitenscheiben einfach in die Führungsschienen eingehängt werden können. Das Abdeckelement deckt vorzugsweise in der Haltestellung die Führungsschienen ab, so dass die Seitenscheiben nicht aus den Führungsschienen entnommen werden können.

Um eine Beeinflussung der Messergebnisse durch eine elektrostatische Aufladung des Windschutzes zu verhindern, sind der Deckel, die Frontscheibe und/oder die Seitenscheiben elektrisch leitend ausgebildet oder beschichtet und miteinander elektrisch leitend gekoppelt, so dass eine statische Ladungen abgeleitet werden können.

Der Trägerrahmen ist beispielsweise an der Rückwand gehalten.

Weitere Vorteile und Merkmale finden sich in der nachfolgenden Beschreibung in Verbindung mit den beigefügten Zeichnungen. In diesen zeigen:
- Figur 1 in einer perspektivischen Ansicht eine Waage mit einem erfindungsgemäßen Windschutz,
- Figur 2 die Waage aus Figur 1 mit den Seitenscheiben in der geöffneten Stellung und entfernter Frontscheibe,
- Figur 3 eine perspektivische Ansicht der Waage aus Figur 1 mit teilweise geöffnetem Deckel,
- Figur 4 den Windschutz aus Figur 3 aus einer zweiten Perspektive,
- Figur 5 in einer perspektivischen Ansicht einen Trägerrahmen eines Deckels des Windschutzes aus Figur 1 mit Führungsschienen einer erfindungsgemäßen Hängeführung,
- Figur 6 in einer perspektivischen Unteransicht ein Abdeckelement für eine erfindungsgemäße Hängeführung,
- Figur 7 eine Seitenansicht der Waage aus Figur 1, die im Bereich der Hängeführung und des Deckels teilgeschnitten ist,
- Figur 7a eine Teilansicht der Waage aus Figur 7 im Bereich der Hängeführung und des Deckels,
- Figur 8 in einer perspektivischen Ansicht eine Seitenscheibe der Waage aus Figur 1 mit einer Haltevorrichtung einer erfindungsgemäßen Hängeführung,
- Figur 9 die Haltevorrichtung aus Figur 8 in einer Detailansicht,
- Figur 10 die Haltevorrichtung aus Figur 8 in einer Detailansicht,
- Figur 11 eine Schnittansicht durch die Haltevorrichtung aus Figur 8 im Bereich eines Führungselements,
- Figur 12 eine Schnittansicht durch den Windschutz der Waage aus Figur 1 im Bereich der Seitenscheibe,
- Figur 13 eine Detailansicht der Anlagefläche des Windschutzes der Waage aus Figur 1,
- Figur 14 die Waage aus Figur 1 mit entferntem Abdeckelement,
- Figur 15 in einer perspektivischen Ansicht den Wägeraumboden der Präzisionswaage aus Figur 1,
- Figur 16 eine Rückansicht des Wägeraumbodens aus Figur 15,
- Figur 17 die Präzisionswaage aus Figur 1 mit teilweise demontiertem Wägeraumboden, und
- Figur 18 eine zweite Ansicht der Präzisionswaage aus Figur 17 mit entfernter Frontscheibe.

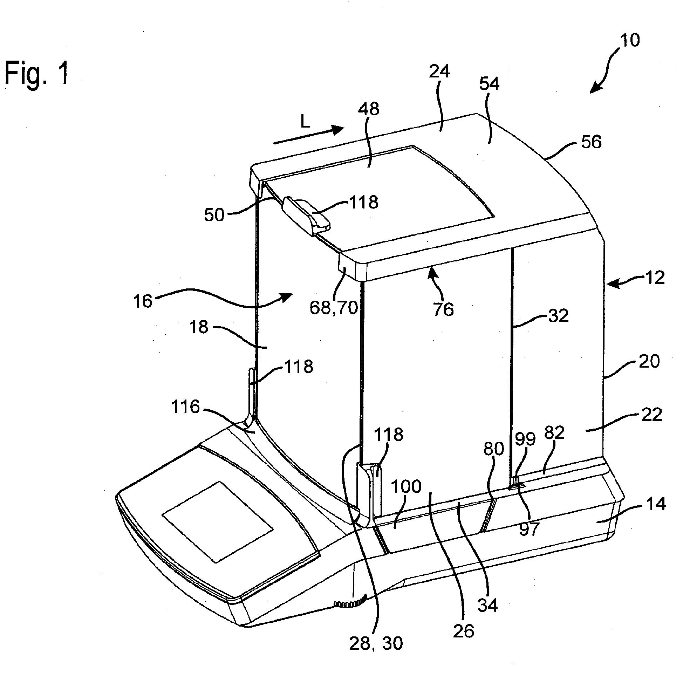

In Figur 1 ist eine Präzisionswaage 10 mit einer Wiegeeinrichtung 14 und einem Windschutz 12 gezeigt. Der Windschutz 12 dient dazu, einen Wägeraum 16 oberhalb der Wiegeeinrichtung 14 zu umgeben und so die Waagschale der Wiegeeinrichtung 14 vor äußeren Einflüssen, beispielsweise Luftbewegungen, elektrostatischen Anziehungskräften oder auch Wärmestrahlung, zu schützen und so eine genaue Messung zu gewährleisten.

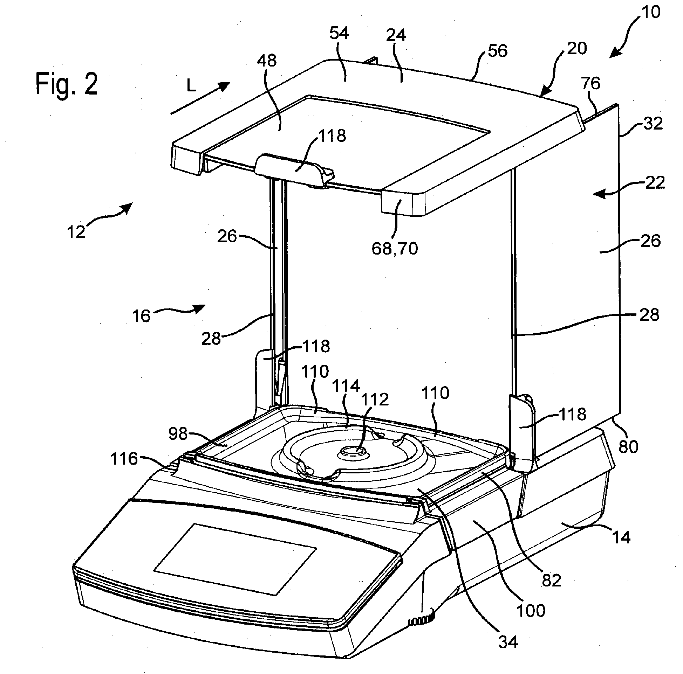

Der Windschutz 12 weist eine Frontscheibe 18, eine Rückwand 20 sowie zwei gegenüberliegende Seitenwände 22 auf. Des Weiteren ist ein Deckel 24 vorgesehen, der den Windschutz 12 nach oben hin abschließt. Die Rückwand 20 ist fest mit der Wiegeeinrichtung 14 verbunden und bildet eine Stütze für den Deckel 24. Die Seitenwände 22 weisen jeweils eine Seitenscheibe 26 auf, die zwischen einer geschlossenen und einer geöffneten Position (Figur 2) verschiebbar sind. Die Seitenscheiben 26 sowie die Frontscheibe 18 erstrecken sich vom Deckel 24 bis zur Wiegeeinrichtung 14.

In der in Figur 1 gezeigten geschlossenen Position liegen die vorderen Ränder 28 der Seitenscheiben 26 an den Seitenrändern 30 der Frontscheibe 18 an. Die hinteren Ränder 32 der Seitenscheiben 26 liegen an den Seitenwänden 22 an. Die Seitenwände 22 sind dicht mit der Rückwand 20 verbunden. Da die Seitenscheiben 26 und die Frontscheibe 18 zudem am Deckel 24 nach oben hin und an der Wiegeeinrichtung 14 nach unten hin abschließen, ist der Wägeraum 16 in der geschlossenen Position der Seitenscheiben 26 vollständig abgeschlossen.

Um den Windschutz 12 bzw. die Präzisionswaage 10 einfach reinigen zu können, sind die Seitenscheiben 26, die Frontscheibe 18, Teile des Deckels 24 sowie der Wägeraumboden 34 demontierbar ausgebildet, wie nachfolgend erläutert wird. Insbesondere können alle Teile ohne Werkzeuge demontiert werden.

Im Folgenden werden die demontierbaren Bauteile des Windschutzes 12 bzw. der Präzisionswaage 10 erläutert.

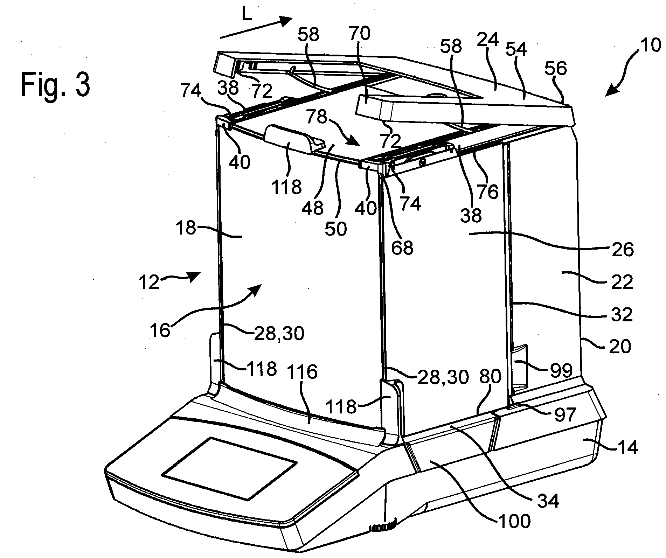

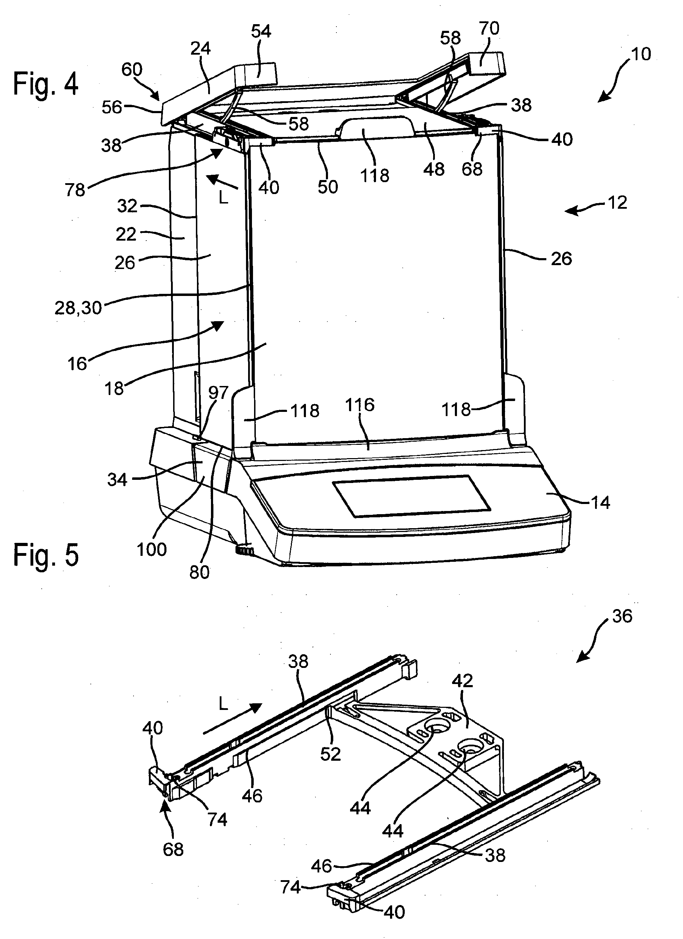

Wie in den Figuren 3 und 4 zu sehen ist, weist der Deckel 24 des Windschutzes 12 einen Trägerrahmen 36 auf, der an der Rückwand 20 gehalten ist. An diesem Trägerrahmen sind Führungsschienen 38 für die Seitenscheiben 26 sowie erste Halteelemente 40 für die Frontscheibe 18 vorgesehen.

Wie insbesondere in Figur 5 zu sehen ist, sind die ersten Halteelemente 40 an einem vorderen Ende der Führungsschienen 38 vorgesehen. Die beiden Führungsschienen 38 sind mit einer Haltegeometrie 42 miteinander verbunden. An dieser Haltegeometrie 42 sind Befestigungsöffnungen 44 zur Montage des Trägerrahmens 36 an der Rückwand 20 vorgesehen.

An den einander zugewandten Flächen der Führungsschienen 38 sind des Weiteren in Längsrichtung L der Führungsschienen 38 verlaufende Gleitschienen 46 vorgesehen. Auf diesen Gleitschienen 46 ist eine Deckscheibe 48 (siehe Figuren 3 und 4) gelagert, die in einer geschlossenen Position am oberen Rand 50 der Frontscheibe 18 anliegt. Um einen Zugang zum Wägeraum 16 zu schaffen, kann die Deckscheibe 48 auf den Gleitschienen 46 in Längsrichtung L verschoben werden.

Die Gleitschienen 46 bestehen vorzugsweise aus Kunststoff. Der übrige Trägerrahmen 36 kann aus Metall, beispielsweise Aluminium, oder ebenfalls aus Kunststoff bestehen. Die Deckscheibe 48 besteht beispielsweise aus Glas und hat vorzugsweise eine elektrisch leitende Beschichtung. Durch die Gleitschienen 46 aus Kunststoff ist ein Verkratzen der Deckscheibe 48 zuverlässig verhindert. Um ein elektrostatisches Aufladen der Deckscheibe 48 zu verhindern, sind im hinteren Bereich der Gleitschienen 46 am Trägerrahmen 36 elektrische Leiter 52, insbesondere Kohlebürsten, vorgesehen, die an der Deckscheibe 48 anliegen und diese elektrisch mit dem Trägerrahmen 36 verbinden.

Um eine elektrische Aufladung des Deckels 24 zu verhindern können alle Teile des Deckels 24 entweder elektrisch leitend ausgebildet oder beschichtet, so dass elektrische Ladungen abgeleitet werden können.

Ebenso können die Frontscheibe 18, die Seitenscheiben 22 sowie alle weiteren Teile des Windschutzes 12 bzw. der Präzisionswaage 10 elektrisch leitend ausgebildet und/oder beschichtet und miteinander elektrisch verbunden sein, so dass eine elektrostatische Aufladung einzelner Teile, insbesondere der Scheibe zuverlässig verhindert ist.

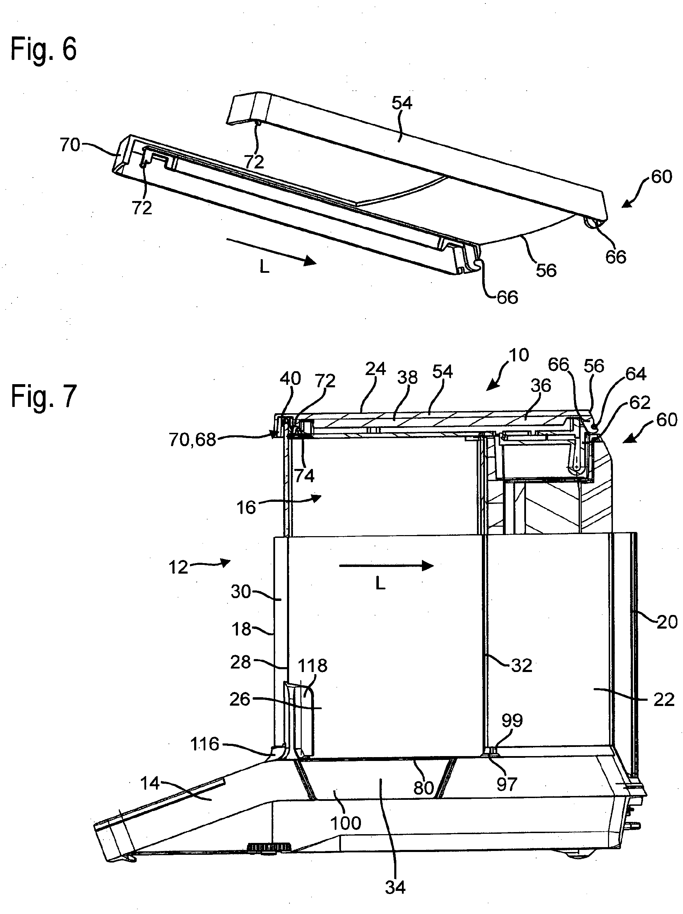

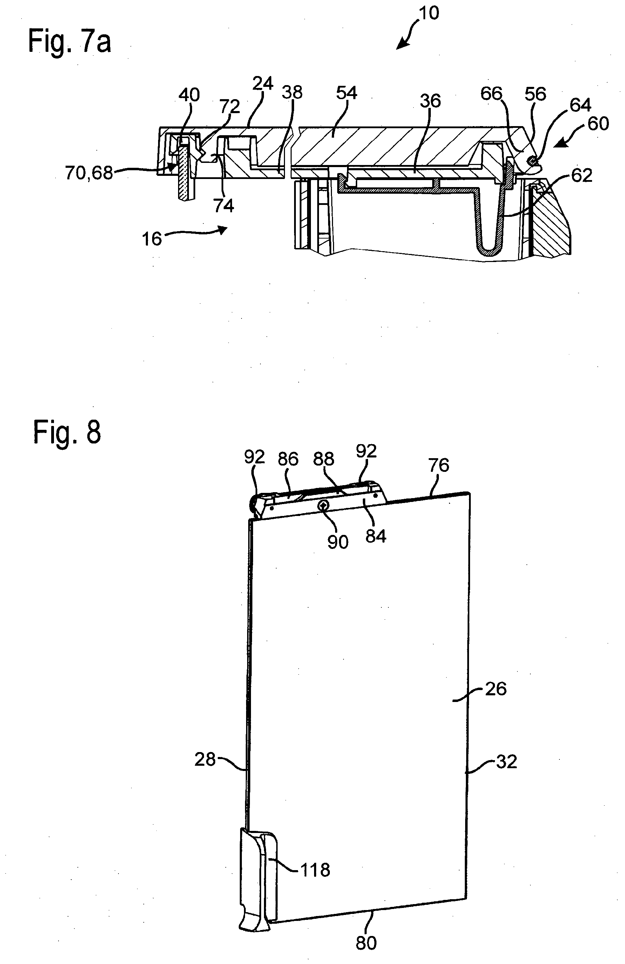

Der Deckel 24 weist des Weiteren ein Abdeckelement 54 auf, das, wie nachfolgend erläutert wird, an einem Rand 56 des Deckels 24, hier dem hinteren Rand 56, zwischen einer Haltestellung (Figur 1) und einer Freigabestellung (Figuren 3 und 4) verschwenkbar ist. Zwischen dem Trägerrahmen 36 und dem Abdeckelement 54 sind Federelemente 58 vorgesehen, die das Abdeckelement 54 in die Freigabestellung beaufschlagen. Die Lagerung 60 des Abdeckelements 54 am Trägerrahmen 36 ist durch am Trägerrahmen 36 vorgesehene Lagerungselemente 62 gebildet, die jeweils einen Lagerungsbolzen 64 aufweisen (siehe Figuren 7 und 7a). Die Lagerungselemente 62 sind in Längsrichtung L federnd nachgiebig ausgebildet. Am Abdeckelement 54 sind in Längsrichtung L, also nach hinten, offene Lagerungshaken 66 vorgesehen, die an den Lagerungsbolzen 64 eingreifen können.

Da die Lagerungselemente 62 in Längsrichtung L nachgiebig ausgebildet sind, kann das gesamte Abdeckelement 54 in Richtung zur Lagerung 60 begrenzt verschoben werden, wobei das Abdeckelement durch die federnd nachgebenden Lagerungselemente 62 in Richtung zu einem zweiten Rand 68, hier dem vorderen Rand 68 des Trägerrahmens 36, beaufschlagt wird.

Um den Deckel 24 in der geschlossenen Halteposition (Figur 7) zu halten, sind am an der Lagerung 60 gegenüberliegenden vorderen Rand 70 des Abdeckelements und am vorderen Rand 68 des Trägerrahmens zweite Halteelemente 72, 74 vorgesehen. Die zweiten Halteelemente 72, 74 sind so ausgebildet, dass diese das Abdeckelement 54 am vorderen Rand 68 des Trägerrahmens 36 fixieren. Durch Verschieben des Abdeckelements 54 in Längsrichtung L in Richtung zur Lagerung 60 können die zweiten Halteelemente 72, 74 gelöst werden.

Wie in Figur 6 zu sehen ist, sind die zweiten Halteelemente 74 am Abdeckelement 54 durch von den Lagerungshaken 66 weg gerichtete Rastelemente gebildet. Die am Trägerrahmen 36 vorgesehenen zweiten Halteelemente 72 sind durch Rastaufnahmen gebildet, die in Richtung zur Lagerung 60 gerichtet sind. Werden die Rasthaken, also die zweiten Halteelemente 74, in Richtung zur Lagerung 60 bewegt, werden diese von den durch die Rastaufnahmen gebildeten zweiten Halteelementen 72 gelöst, so dass das Abdeckelement 54 um die Lagerung 60 herum in die Freigabestellung verschwenkt werden kann.

Die zweiten Halteelemente 72, 74 werden also beispielsweise durch einen Druck auf den vorderen Rand des Abdeckelements 54 gelöst, durch den das Abdeckelement zur Lagerung 60 verschoben wird. Anschließend wird das Abdeckelement 54 durch die Federelemente 58 in die Freigabestellung bewegt.

Selbst wenn keine Federelemente 58 vorgesehen sind, ist es auf einfache Weise möglich, die zweiten Halteelemente 72, 74 zu lösen und das Abdeckelement in die Freigabestellung zu bewegen. Zum Lösen der zweiten Halteelemente 72, 74 ist Druck auf den vorderen Rand 70 erforderlich. Nach dem Lösen der zweiten Halteelemente 72, 74 muss lediglich die Druckrichtung geändert und leicht nach oben gerichtet werden. Insbesondere ist es möglich, eine nach schräg oben und in Längsrichtung L weisende Druckrichtung zu wählen, durch die eine ausreichende Druckkraft zum Lösen der zweiten Halteelemente 72, 74 aufgebracht wird und das Abdeckelement 54 anschließend ohne Änderung der Druckrichtung in die Freigabestellung bewegt wird. Somit kann das Abdeckelement in einer flüssigen Bewegung von der Haltestellung in die Freigabestellung bewegt werden. Ein aufwendiges Lösen der zweiten Halteelemente 72, 74 ist nicht erforderlich.

In der in den Figuren 3 und 4 gezeigten Freigabestellung ist es auch möglich, die Deckscheibe 48 werkzeuglos aus dem Trägerrahmen 36 zu entnehmen, indem diese nach oben aus den Gleitschienen 46 entnommen wird.

Des Weiteren können in dieser Freigabestellung, wie nachfolgend erläutert wird, die Seitenscheiben 26 des Windschutzes 12 ebenfalls werkzeuglos entfernt werden.

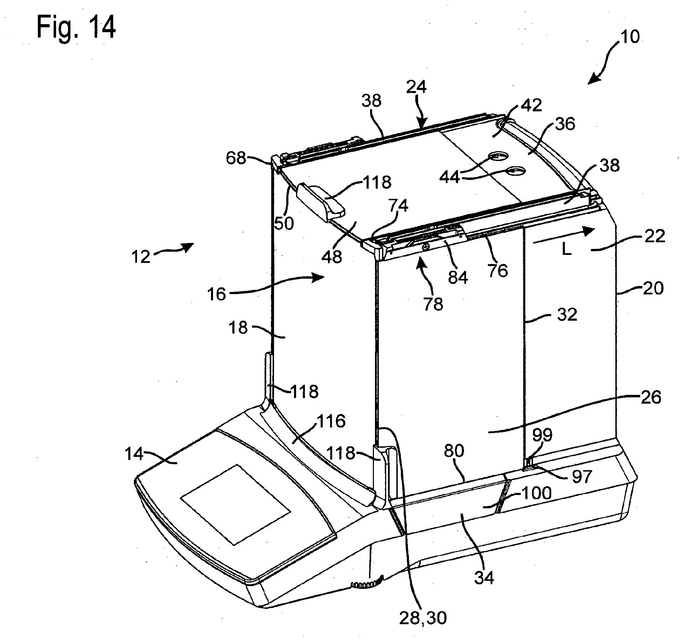

Wie in Figur 14 zu sehen ist, kann das Abdeckelement 54 nach dem Bewegen in die Freigabestellung auch vollständig entfernt werden, so dass eine einfachere Entnahme der Deckscheibe 48 und der Seitenscheiben 26 möglich ist. Diese Entnahme ist möglich, da die Lagerungshaken 66 offen ausgebildet sind, so dass diese einfach von den Lagerungsbolzen 64 gelöst werden können. In der Haltestellung werden die Lagerungshaken 66 dagegen durch die Federvorspannung der Lagerungselemente 62 gegen die Lagerungsbolzen 64 beaufschlagt, so dass ein Lösen nicht möglich ist. Die Lagerungshaken 66 können beispielsweise auch an den Lagerungsbolzen 64 verrasten, um eine zusätzliche Sicherung gegen ein Entfernen des Abdeckelements 54 bereitzustellen.

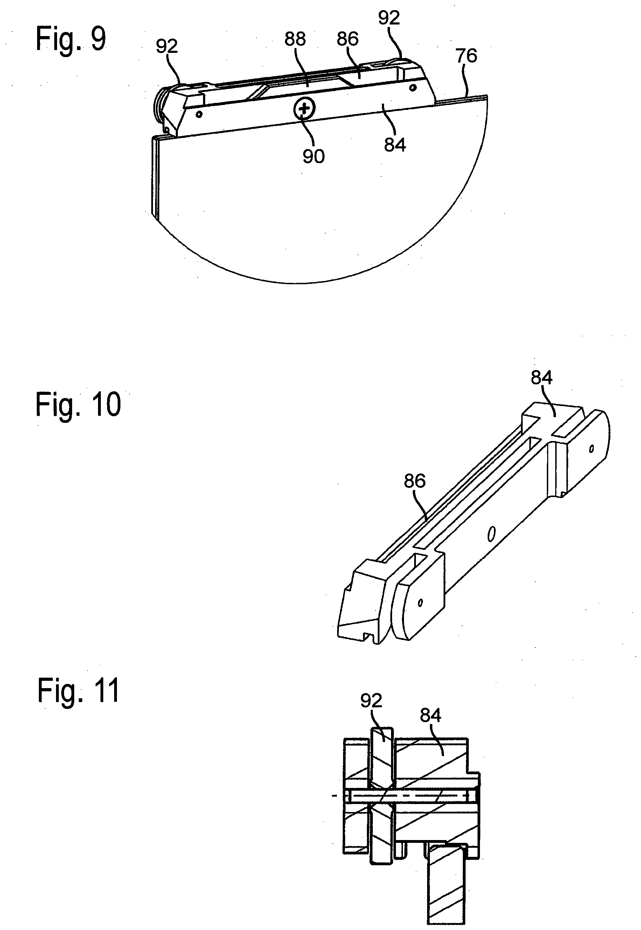

Die Lagerung der Seitenscheiben 26 erfolgt durch eine in den Figuren 8 bis 12 im Detail dargestellte, am oberen Rand 76 der Seitenscheiben 26 angeordnete Hängeführung 78 sowie eine am unteren Rand 80 der Seitenscheiben 26 vorgesehene Anlagefläche 82.

Die Hängeführungen 78 sind jeweils durch eine Führungsschiene 38 des Trägerrahmens 36 sowie durch eine Haltevorrichtung 84 gebildet, an welcher die Seitenscheibe 26 gehalten ist.

Wie in den Figuren 8 bis 11 zu sehen ist, weist die Haltevorrichtung 84 eine Aufnahme 86 für die Seitenscheibe 26 auf. Die Aufnahme 86 ist durch einen Schlitz gebildet, durch den ein Vorsprung 88 der Seitenscheibe 26 geführt ist (Figur 8). Der Vorsprung 88 ist durch eine Schraube 90 an der Aufnahme 86 fixiert. Die Schraube 90 kann die Seitenscheibe gegen die Aufnahme 86 klemmen oder sich durch die Seitenscheibe hindurch erstrecken.

An der Haltevorrichtung 84 sind des Weiteren durch Rollen gebildete Führungselemente 92 vorgesehen, mit welchen die Haltevorrichtung 84 in den Führungsschienen 38 in Längsrichtung L verschiebbar gelagert werden kann.

Die Anlagefläche 82 ist durch eine seitliche Umrandung des Wägeraumbodens 34 gebildet, wobei die Anlagefläche 82 in Längsrichtung L und im Wesentlichen vertikal verläuft.

Die Führungsschienen 38 weisen jeweils eine nach oben offene Nut 94 auf, in die die Führungselemente 92 vertikal von oben eingehängt werden können. Die Baugruppe aus der Haltevorrichtung 84 und der Seitenscheibe 26 kann in diesem montierten Zustand um die Kontaktlinie 96 zwischen Führungsschienen 38 und Führungselementen 92 verschwenkt werden.

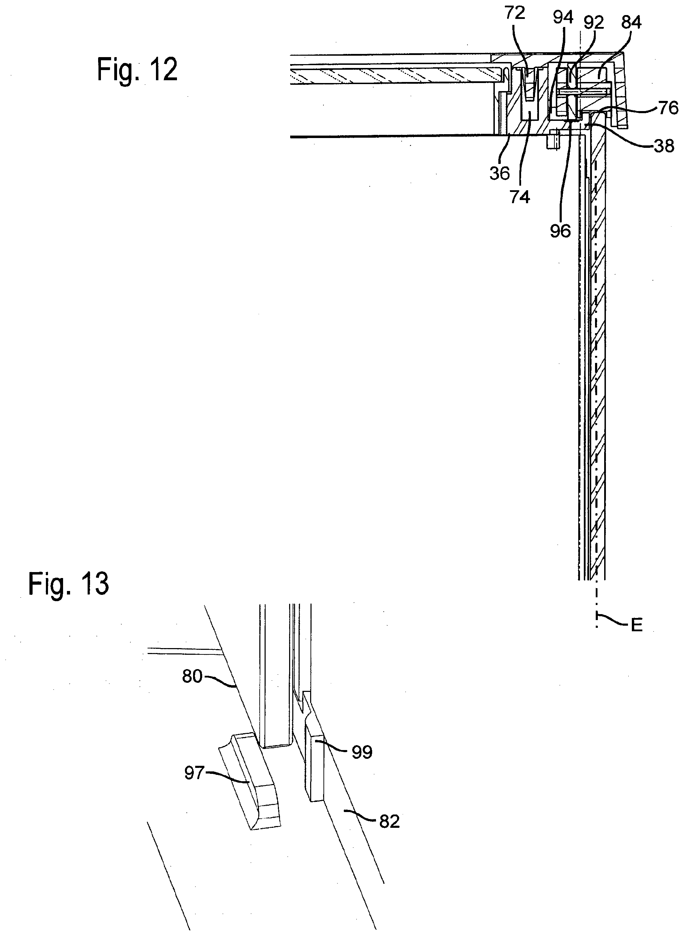

Wie insbesondere in Figur 12 zu sehen ist, sind die Führungselemente 92 außerhalb der Ebene E angeordnet, die durch die Aufnahme 86 und die Seitenscheibe 26 gebildet ist. Dadurch befindet sich der Schwerpunkt der Baugruppe, die aus der Haltevorrichtung 84 und der Seitenscheibe 26 gebildet ist, bezüglich Figur 12 seitlich versetzt zur Vertikalen durch die Kontaktlinie 96. Aufgrund der Schwerkraft ist diese Baugruppe daher bestrebt, den Schwerpunkt unter die Kontaktlinie 96 zu bewegen. Dadurch wird die Seitenscheibe 26 mit dem unteren Rand 80 gegen die Anlagefläche 82 gedrückt, so dass die Seitenscheibe 26 dicht an der Anlagefläche 82 anliegt.

Da die Anlagefläche 82 in Längsrichtung L verläuft, dient diese zudem als Führung für den unteren Rand 80 der Seitenscheibe 26. Zusätzlich ist an der Anlagefläche 82 ein Führungsfortsatz 97 vorgesehen, der als Sicherung dient, um ein Abheben des unteren Randes 80 der Seitenscheibe 26 von der Anlagefläche 82 zu verhindern. Im regulären Betrieb der Präzisionswaage 10 bzw. des Windschutzes 12 ist dieser Führungsfortsatz 97 aber nicht erforderlich, da die Seitenscheibe 26 durch die Schwerkraft gegen die Anlagefläche 82 gedrückt wird.

Des Weiteren ist an der Seitenfläche 22 ein Rastanschlag 99 vorgesehen, der die Seitenscheibe 26 in der geschlossenen Position hält.

Außer der am oberen Rand 76 der Seitenscheiben 26 angeordneten Hängeführung 78 ist also keine zusätzliche, aufwendige Lagerung am unteren Rand 80 erforderlich.

Da die Führungsschienen 38 durch nach oben offene Nuten 94 gebildet sind, können die Seitenscheiben 26 auf einfache Weise vertikal nach oben aus den Führungsschienen 38 entnommen werden.

Auch die Montage der Seitenscheiben 26 ist vereinfacht, da diese lediglich mit den Haltevorrichtungen 84 bzw. den Führungselementen 92 in die Führungsschienen 38 eingehängt werden müssen. Aufgrund der Schwerkraft gelangen die unteren Ränder 80 selbständig mit den Anlageflächen 82 in Anlage. Eine aufwendige Ausrichtung der unteren Ränder 80 oder ein Einfädeln in eine untere Führung ist nicht erforderlich.

Um die Entnahme der Seitenscheiben 26 im normalen Betrieb des Windschutzes 12 zu verhindern, deckt das Abdeckelement 54 in der Haltestellung die Führungsschienen 38 vertikal nach oben ab. Die Führungselemente 92 können so nicht aus den Führungsschienen entnommen werden. Um die Seitenscheiben 26 entnehmen zu können, ist es erforderlich, das Abdeckelement 54 in die Freigabestellung zu bewegen, in der die Führungsschienen 38 vertikal nach oben geöffnet sind.

Unabhängig von der Ausführung der Haltevorrichtung bzw. der Führungselemente 92 ist es lediglich erforderlich, dass die Führungselemente 92 außerhalb der durch die Seitenscheibe 26 bzw. die Aufnahmen 86 gebildeten Ebene angeordnet sind, so dass die Seitenscheibe um die Kontaktlinie 96 zwischen Führungsschiene 38 und Führungselement 92 gegen die Anlagefläche 82 kippen kann.

Um ein Kippen in der Ebene der Seitenscheiben 26 zu verhindern, können an einer Seitenscheibe 26 auch mehrere Haltevorrichtungen 84 vorgesehen sein.

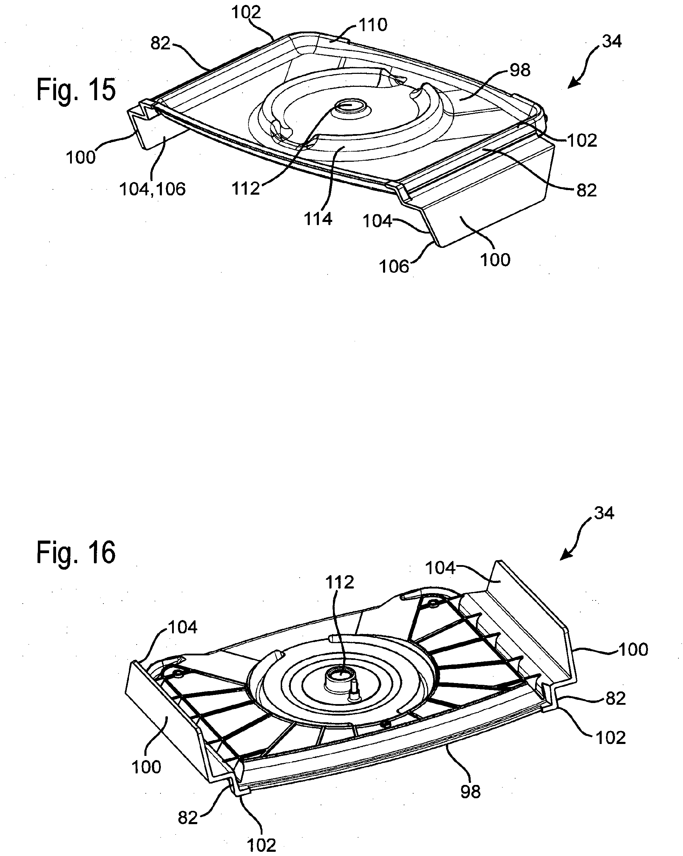

Wie in den Figuren 15 bis 18 zu sehen ist, sind die Anlageflächen 82 am Wägeraumboden 34 der Präzisionswaage 10 angeordnet. Neben dem Deckel 24, den Seitenscheiben 26 und der Frontscheibe 18 ist auch der Wägeraumboden 34 demontierbar ausgeführt, so dass auch dieser zum Reinigen aus der Präzisionswaage 10 entnommen werden kann.

Der Wägeraumboden 34 hat dazu einen Wägebodenabschnitt 98 sowie zwei Seitenwangen 100. Die Seitenwangen 100 befinden sich an gegenüberliegenden Rändern 102 des Wägebodenabschnitts 98 und sind im Wesentlichen senkrecht zum Wägebodenabschnitt 98 und parallel zueinander angeordnet.

An den einander zugewandten Innenflächen 104 befinden sich Befestigungsvorrichtungen 106, die in dieser Ausführungsform durch Rastelemente gebildet sind. Am Gehäuse der Wiegeeinrichtung 14 sind im Wesentlichen horizontal verlaufende Rastkanten 108 vorgesehen, an welchen die Befestigungsvorrichtungen 106 eingreifen können.

Der Wägeraumboden 34 wird vertikal von oben auf die Wiegeeinrichtung 14 aufgesetzt, wobei die Seitenwangen 100 das Gehäuse an gegenüberliegenden Seiten umgreifen. Der Wägeraumboden 34 wird auf das Gehäuse aufgeschoben, bis die Befestigungsvorrichtungen 106 an den Rastkanten 108 verrasten. Die Seitenwangen 100 sind federnd nachgiebig ausgebildet, so dass diese beim Aufschieben auf die Rastkanten nachgeben können. Befinden sich die Befestigungsvorrichtungen 106 hinter den Rastkanten, werden die Seitenwangen 100 federnd gegen das Gehäuse gedrückt, so dass die Befestigungsvorrichtungen 106 an den Rastkanten 108 verrasten.

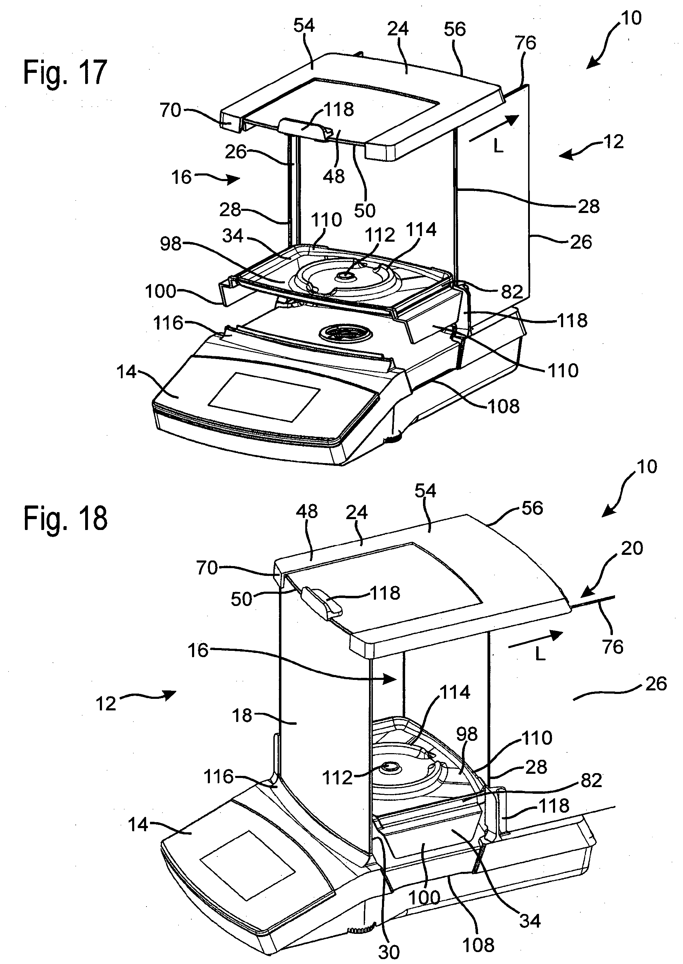

Zur Demontage des Wägeraumbodens 34 werden die Seitenwangen 100 seitlich weggezogen, bis die Befestigungsvorrichtungen 106 von den Rastkanten 108 gelöst sind. Anschließend kann der Wägeraumboden 34 nach oben vom Gehäuse abgezogen werden (Figur 18).

Wie in den Figuren 15 und 17 zu sehen ist, sind die Anlageflächen 82 für die Seitenscheiben 26 jeweils durch einen an den Seitenwangen 100 vorgesehenen Absatz gebildet, auf dem auch der Führungsfortsatz 97 vorgesehen ist. Abhängig von der Form des Gehäuses und des Wägeraumbodens 34 ist ein solcher Absatz aber nicht erforderlich.

Der Wägebodenabschnitt 98 ist im Wesentlichen eben ausgebildet (Figur 15), wobei die umlaufenden Ränder 110 gegenüber dem übrigen Wägebodenabschnitt 98 erhöht sind. Mittig befindet sich eine Durchtrittsöffnung 112 für eine nicht im Detail dargestellte Wägetechnik. Um diese Durchtrittsöffnung 112 ist ebenfalls ein erhöhter Rand 114 ausgebildet.

Die erhöhten Ränder 110, 114 verhindern, dass Flüssigkeiten, die auf den Wägebodenabschnitt 98 gelangt sind, aus dem Wägeraumboden 34 heraus fließen und beispielsweise durch die Durchtrittsöffnung 112 zur Wägetechnik fließen und diese verschmutzen können.

Wie in den Figuren 16 und 17 zu sehen ist, bilden die Seitenwangen 100 des Wägeraumbodens 34 abschnittsweise die Seitenwände 22 des Windschutzes 12. Da zwischen den Seitenwänden und dem Wägebodenabschnitt 98 somit kein Spalt vorhanden ist, können Flüssigkeiten oder Fremdkörper, die auf den Wägeraumboden 34 gelangt sind, nicht in das Gehäuse eindringen und die Wägetechnik verschmutzen.

Wie in den Figuren 17 und 18 zu sehen ist, kann neben den Seitenscheiben 26, dem Deckel 24 und dem Wägeraumboden 34 auch die Frontscheibe 18 aus den ersten Halteelementen 40 und einer Halteschiene 116 entnommen werden. Die ersten Halteelemente 40 sind dazu in vertikaler Richtung begrenzt federnd nachgiebig ausgebildet, so dass diese zur Entnahme der Frontscheibe 18 nach oben angehoben werden können.

Somit können annähernd alle Teile des Windschutzes 12 werkzeuglos demontiert werden, wodurch eine einfache Reinigung des Windschutzes 12 bzw. der Präzisionswaage 10 sowie ein einfacher Zugang zum Wägeraum 16 möglich sind.

Um die Scheiben, also die Deckscheibe 48, die Seitenscheibe 26 sowie die Frontscheibe 18 einfach reinigen zu können, können an den Scheiben vorhandene Bauteile, beispielsweise Griffe 118 oder die Haltevorrichtungen 84 ebenfalls einfach, vorzugsweise werkzeuglos, demontiert werden. Insbesondere können die Griffe 118 einfach an den Scheiben verrastet sein, wobei ein werkzeugloses Lösen dieser Verrastung möglich ist.

## Patentansprüche

1. Deckel (24) für einen Windschutz (12) einer Präzisionswaage (10), mit einem Trägerrahmen (36), an dem erste Halteelemente (40) und/oder Führungsschienen (38) für eine Frontscheibe (18) und/oder zumindest eine Seitenscheibe (26) vorgesehen sind, und mit einem Abdeckelement (54), das um eine an einem ersten Rand vorgesehene Lagerung (60) zwischen einer Haltestellung und einer Freigabestellung verschwenkbar ist, wobei am der Lagerung (60) gegenüberliegenden zweiten Rand zweite Halteelemente (72, 74) am Deckel (24) vorgesehen sind, die so ausgebildet sind, dass sie das Abdeckelement (54) am Rand des Trägerrahmens (36) fixieren, wobei zumindest ein Abschnitt des Abdeckelements (54) in Richtung zur Lagerung (60) verschiebbar ist, um die zweiten Halteelemente (72, 74) zu lösen.

2. Deckel nach Anspruch 1, **dadurch gekennzeichnet, dass** die zweiten Halteelemente (72, 74) durch am Abdeckelement (54) vorgesehene, von der Lagerung (60) weg gerichtete Rastelemente und/oder Rastaufnahmen und am Trägerrahmen (36) vorgesehene, in Richtung zur Lagerung (60) gerichtete Rastaufnahmen und/oder Rastelemente gebildet sind.

3. Deckel nach Anspruch 1 oder 2, **dadurch gekennzeichnet, dass** das gesamte Abdeckelement (54) in Richtung zur Lagerung (60) verschiebbar ist, um die zweiten Halteelemente (72, 74) zu lösen.

4. Deckel nach Anspruch 3, **dadurch gekennzeichnet, dass** die Lagerung (60) vom zweiten Rand weg federnd ausgebildet ist, wobei die Lagerung (60) insbesondere begrenzt verschiebbare Lagerungselemente (62) aufweist.

5. Deckel nach Anspruch 4, **dadurch gekennzeichnet, dass** die Lagerungselemente (62) in Richtung zu den zweiten Halteelementen (72, 74) federbeaufschlagt sind.

6. Deckel nach einem der vorhergehenden Ansprüche, **dadurch gekennzeichnet, dass** die Lagerungselemente (62) jeweils einen Lagerungsbolzen (64) aufweisen und am Abdeckelement (54) Lagerungshaken (66) vorgesehen sind, die an den Lagerungsbolzen (64) angreifen.

7. Deckel nach einem der vorhergehenden Ansprüche, **dadurch gekennzeichnet, dass** zwischen Trägerrahmen (36) und Abdeckelement (54) zumindest ein Federelement (58) vorgesehen ist, das das Abdeckelement (54) in die Freigabestellung beaufschlagt.

8. Deckel nach einem der vorhergehenden Ansprüche, **dadurch gekennzeichnet, dass** der Deckel (24) eine Deckscheibe (48) aufweist, die verschiebbar am Trägerrahmen (36) gelagert ist, wobei das Abdeckelement (54) in der Haltestellung die Deckscheibe (48) am Trägerrahmen (36) hält und in der Freigabestellung die Deckscheibe (48) freigibt.

9. Deckel nach Anspruch 8, **dadurch gekennzeichnet, dass** die Deckscheibe (48) eine elektrisch leitende Beschichtung aufweist.

10. Deckel nach Anspruch 8 oder 9, **dadurch gekennzeichnet, dass** am Trägerrahmen (36) Gleitschienen (46) für die Deckscheibe (48) vorgesehen sind, die insbesondere aus Kunststoff bestehen, und dass an den Gleitschienen (46) Kohlebürsten als elektrische Leiter (52) vorgesehen sind, die an der Deckscheibe (48) anliegen und diese elektrisch mit dem Trägerrahmen verbinden.

11. Deckel nach einem der vorhergehenden Ansprüche, **dadurch gekennzeichnet, dass** der Trägerrahmen (36), die Deckscheibe (48) und/oder das Abdeckelement (54) elektrisch leitend ausgebildet oder beschichtet sind und miteinander elektrisch leitend gekoppelt sind.

12. Windschutz (12) für eine Präzisionswaage (10) mit einer Frontscheibe (18), einer Rückwand (20), zwei gegenüberliegenden Seitenscheiben (26) und einem Deckel (24) nach einem der vorhergehenden Ansprüche, wobei am Trägerrahmen (36) Führungsschienen (38) für die Seitenscheiben (26) und/oder erste Halteelemente (40) für die Frontscheibe (18) vorgesehen sind.

13. Windschutz nach Anspruch 12, **dadurch gekennzeichnet, dass** die Führungsschienen (38) einen U-förmigen, nach oben offenen Querschnitt aufweisen, und das Abdeckelement (54) in der Haltestellung die Führungsschienen (38) abdeckt.

14. Windschutz nach Anspruch 12 oder 13, **dadurch gekennzeichnet, dass** der Trägerrahmen (36) an der Rückwand (20) gehalten ist.

15. Windschutz nach einem der Ansprüche 12 bis 14, **dadurch gekennzeichnet, dass** der Deckel (24), die Frontscheibe (18) und/oder die Seitenscheiben (20) elektrisch leitend ausgebildet oder beschichtet sind und miteinander elektrisch leitend gekoppelt sind.

## Claims

1. A cover (24) of a draft shield (12) of a precision balance (10), having a carrier frame (36), on which first retaining elements (40) and/or guide rails (38) for a front panel (18) and/or at least one side panel (26) are provided, and having a covering element (54) which can be pivoted between a retaining position and a release position about a mounting (60) provided along a periphery, wherein second retaining elements (72, 74) are provided on the periphery located opposite the mounting (60) on the cover (24), which are designed such that they fix the covering element (54) on the periphery of the carrier frame (36), wherein at least one section of the covering element (54) can be displaced in the direction of the mounting (60), in order to release the second retaining elements (72, 74).

2. The cover according to claim 1, **characterized in that** the second retaining elements (72, 74) are formed by locking fixtures and/or locking elements provided on the covering element (54) directed away from the mount (60) and by locking fixtures and/or locking elements provided on the carrier frame (36) directed in the direction of the mount (60).

3. The cover according to claim 1 or 2, **characterized in that** the entire covering element (54) is displaceable in the direction of the mount (60), in order to release the second retaining elements (72, 74).

4. The cover according to claim 3, **characterized in that** the mount (60) is designed to be resilient away from the second periphery, wherein the mount (60) has in particular mounting elements (62) that are displaceable to a limited extent.

5. The cover according to claim 4, **characterized in that** the mounting elements (62) are spring loaded in the direction of the second retaining elements (72, 74).

6. The cover according to any of the preceding claims, **characterized in that** the mounting elements (62) each have a mounting bolt (64) and that mounting hooks (66) are provided on the covering element (54), said mounting hooks engaging on the mounting bolts (64).

7. The cover according to any of the preceding claims, **characterized in that** at least one spring element (58) is provided between carrying frame (36) and covering element (54), said spring element impinging the covering element (54) in the release position.

8. The cover according to any of the preceding claims, **characterized in that** the cover (24) has a cover panel (48) which is displaceably mounted on the carrier frame (36), wherein the covering element (54) retains the cover panel (48) on the carrier frame (36) in the retaining position and releases the cover panel (48) in the release position.

9. The cover according to claim 8, **characterized in that** the cover panel (48) has an electrically conductive coating.

10. The cover according to claim 8 or 9, **characterized in that** slide rails (46) for the cover panel (48) are provided on the carrier frame (36), said slide rails in particular consisting of plastic, and that carbon brushes are provided on the slide rails (46) as electrical conductors (52), which rest against the cover panel (48) and electrically connect said cover panel to the carrier frame.

11. The cover according to any of the preceding claims, **characterized in that** the carrier frame (36), the cover panel (48) and/or the covering element (54) are designed to be electrically conductive or coated and are coupled with one another in an electrically conductive manner.

12. A draft shield (12) for a precision balance (10) with a front panel (18), a rear wall (20), two opposing side panels (26) and a cover (24) according to any of the preceding claims, wherein guide rails (38) are provided on the carrier frame (36) for the side panels (26) and/or first retaining elements (40) are provided for the front panel (18).

13. The draft shield according to claim 12, **characterized in that** the guide rails (38) have a U-shaped cross-section that is open to the top, and that the covering element (54) covers the guide rails (38) in the retaining position.

14. The draft shield according to claim 12 or 13, **characterized in that** the carrier frame (36) is retained on the rear wall (20).

15. The draft shield according to any of claims 12 to 14, **characterized in that** the cover (24), the front panel (18) and/or the side panels (20) are designed to be electrically conductive or coated and are coupled to one another in an electrically conductive manner.

## Revendications

1. Couvercle (24) pour un paravent (12) d'une balance de précision (10), avec un cadre de support (36), sur lequel des premiers éléments de retenue (40) et/ou rails de guidage (38) pour une vitre avant (18) et/ou au moins une vitre latérale (26) sont prévus, et avec un élément de couverture (54), qui peut pivoter entre une position de retenue et une position de libération autour d'un support (60) prévu sur un premier bord, dans lequel, sur le deuxième bord opposé au support (60), des deuxièmes éléments de retenue (72, 74) sont prévus sur le couvercle (24), qui sont réalisés de sorte qu'ils fixent l'élément de couverture (54) sur le bord du cadre de support (36), dans lequel au moins une section de l'élément de couverture (54) peut se déplacer en direction du support (60), afin de débloquer les deuxièmes éléments de retenue (72, 74).

2. Couvercle selon la revendication 1, **caractérisé en ce que** les deuxièmes éléments de retenue (72, 74) sont formés par des éléments d'encliquetage et/ou logements d'encliquetage prévus sur l'élément de couverture (54), orientés à l'opposé du support (60), et des logements d'encliquetage et/ou éléments d'encliquetage prévus sur le cadre de support (36), orientés en direction du support (60).

3. Couvercle selon la revendication 1 ou 2, **caractérisé en ce que** tout l'élément de couverture (54) peut se déplacer en direction du support (60), afin de débloquer les deuxièmes éléments de retenue (72, 74).

4. Couvercle selon la revendication 3, **caractérisé en ce que** le support (60) est réalisé de manière à avoir une mobilité élastique à distance du deuxième bord, dans lequel le support (60) présente en particulier des éléments de support (62) mobiles de manière limitée.

5. Couvercle selon la revendication 4, **caractérisé en ce que** les éléments de support (62) sont soumis à l'effet d'un ressort en direction des deuxièmes éléments de retenue (72, 74) .

6. Couvercle selon l'une quelconque des revendications précédentes, **caractérisé en ce que** les éléments de support (62) présentent respectivement un boulon de support (64) et des crochets de support (66), qui agissent sur le boulon de support (64), sont prévus sur l'élément de couverture (54).

7. Couvercle selon l'une quelconque des revendications précédentes, **caractérisé en ce qu'**au moins un élément ressort (58), qui sollicite l'élément de couverture (54) dans la position de libération, est prévu entre le cadre de support (36) et l'élément de couverture (54).

8. Couvercle selon l'une quelconque des revendications précédentes, **caractérisé en ce que** le couvercle (24) présente un disque de recouvrement (48), qui est monté mobile sur le cadre de support (36), dans lequel l'élément de couverture (54), dans la position de retenue, retient le disque de recouvrement (48) sur le cadre de support (36) et, dans la position de libération, libère le disque de recouvrement (48).

9. Couvercle selon la revendication 8, **caractérisé en ce que** le disque de recouvrement (48) présente un revêtement électro-conducteur.

10. Couvercle selon la revendication 8 ou 9, **caractérisé en ce que** des glissières (46) pour le disque de recouvrement (48), qui sont en particulier constituées de matière plastique, sont prévues sur le cadre de support (36), et que des balais à charbon, qui s'appliquent contre le disque de recouvrement (48) et relient celui-ci électriquement au cadre de support, sont prévus en tant que conducteurs électriques (52) sur les glissières (46).

11. Couvercle selon l'une quelconque des revendications précédentes, **caractérisé en ce que** le cadre de support (36), le disque de recouvrement (48) et/ou l'élément de couverture (54) sont réalisés ou revêtus de manière électro-conductrice et sont couplés les uns aux autres de manière électro-conductrice.

12. Paravent (12) pour une balance de précision (10) avec une vitre avant (18), une vitre arrière (20), deux vitres latérales (26) opposées et un couvercle (24) selon l'une quelconque des revendications précédentes, dans lequel des rails de guidage (38) pour les vitres latérales (26) et/ou des premiers éléments de retenue (40) pour la vitre avant (18) sont prévus sur le cadre de support (36).

13. Paravent selon la revendication 12, **caractérisé en ce que** les rails de guidage (38) présentent une section transversale en forme de U, ouverte vers le haut, et l'élément de couverture (54), dans la position de retenue, recouvre les rails de guidage (38).

14. Paravent selon la revendication 12 ou 13, **caractérisé en ce que** le cadre de support (36) est retenu sur la paroi arrière (20).

15. Paravent selon l'une quelconque des revendications 12 à 14, **caractérisé en ce que** le couvercle (24), la vitre avant (18) et/ou les vitres latérales (20) sont réalisés ou revêtus de manière électro-conductrice et sont couplés les uns aux autres de manière électro-conductrice.
